**Europäisches Patentamt**

**European Patent Office**

**Office européen des brevets**

(19)

(11) Veröffentlichungsnummer : **0 395 931 B1**

## (12) EUROPÄISCHE PATENTSCHRIFT

(45) Veröffentlichungstag der Patentschrift :
**29.07.92 Patentblatt 92/31**

(51) Int. Cl.⁵ : **B60S 1/52**

(21) Anmeldenummer : **90107190.2**

(22) Anmeldetag : **14.04.90**

(54) **Scheibenwaschanlage für Kraftfahrzeuge.**

(30) Priorität : **05.05.89 DE 3914768**

(43) Veröffentlichungstag der Anmeldung :
**07.11.90 Patentblatt 90/45**

(45) Bekanntmachung des Hinweises auf die
Patenterteilung :
**29.07.92 Patentblatt 92/31**

(84) Benannte Vertragsstaaten :
**ES FR GB IT SE**

(56) Entgegenhaltungen :
**DE-U- 8 802 529**
**DE-U- 8 905 635**

(73) Patentinhaber : **Hella KG Hueck & Co.**
**Rixbecker Strasse 75 Postfach 28 40**
**W-4780 Lippstadt (DE)**

(72) Erfinder : **Orth, Peter**
**Buchenweg 13**
**W-4780 Lippstadt (DE)**
Erfinder : **Witt, Ulrich**
**Bökenförder Strasse 87**
**W-4780 Lippstadt (DE)**

## Beschreibung

Die Erfindung bezieht sich auf eine Scheibenwaschanlage für Kraftfahrzeuge, insbesondere Streuscheibenwaschanlage, mit einem zylinderförmigen und hohl ausgeführten Düsenträger, in dessen Hohlraum die Düse klemmend eingesetzt ist, welche mit ihrem Sprühkopf aus dem Düsenträger herausragt, der in seiner Ruhestellung in einer Karosserieöffnung versenkt einbaubar ist und in seiner Gebrauchsstellung aus der Karosserieöffnung herausfahrbar ist, und mit einer die Sicht auf die versenkte Düse abschirmenden, die Karosserieöffnung verschließbaren Kappe, welche an dem freien Ende des Düsenträgers befestigt ist.

Eine solche Scheibenwaschanlage für Kraftfahrzeuge ist aus dem DE-U-8 802 529 bekannt. Hierbei ist die Kappe zusammen mit der Scheibenwaschanlage von der Innenseite der Karosserie her eingebaut. Außerdem ist in dem Gebrauchsmuster die Befestigung der Kappe an dem Düsenträger nicht näher erläutert.

Ferner ist aus dem deutschen Gebrauchsmuster DE-U-8 204 655 eine Scheibenwaschanlage bekannt, bei welcher es sich um eine ortsfeste Düse handelt, auf deren Düsenträger eine Kappe mit Preßsitz in einem den Düsenträger umgebenden Spalt angeordnet ist und mit ihrem umlaufenden Rand an der Außenseite der Karosserie anliegt.

Aufgabe der Erfindung ist es, die im Gattungsbegriff beschriebene Scheibenwaschanlage derart zu verbessern, daß die Kappe leicht und nach der Montage der Scheibenwaschanlage an der Fahrzeugkarosserie an dem unterhalb der Karosserieöffnung angeordneten Düsenträger an- und abbaubar ist. Diese Aufgabe wird nach der Erfindung dadurch gelöst, daß an die Stirnfläche des zylinderförmigen und hohl ausgeführten Düsenträgers ein zylinderförmiger Wandungsabschnitt angeformt ist, welcher eine solche Ausnehmung aufweist, daß er in seinen senkrecht zur Mittelachse verlaufenden Querschnitten einen in Sprührichtung der Düse geöffneten Bogen beschreibt und mit seinem oberhalb des Düsenkopfes verlaufenden Endabschnitt zwischen zwei an die Innenseite der Kappe angeformte Wandungen eingreift, von denen eine in eine Hinterschneidung des Endabschnitts des Düsenträgers eingreift. Bei einer solchen Lösung muß der Durchmesser der Karosserieöffnung zumindest nicht wesentlich größer ausgeführt werden als der Außendurchmesser des zylinderförmigen Düsenträgers. Außerdem ist die Kappe, obwohl der mit ihr verbundene Wandungsabschnitt des Düsenträgers eine Ausnehmung aufweist, sowohl in der Verstellrichtung des Düsenträgers als auch senkrecht zu dieser sicher an dem Wandungsabschnitt des Düsenträgers arretiert. In diesem Zusammenhang ist es vorteilhaft, wenn die Kappe kreisrund ist und konzentrisch zur Mittelachse des zylinderförmigen Wandungsabschnitts des Düsenträgers verläuft. Dadurch kann der Spalt zwischen der Kappe und der angrenzenden Karosserie sehr klein ausgeführt sein.

Bei einer anderen vorteilhaften Weiterbildung der Erfindung ist die Kappe mit ihrer Doppelwandung selbstrastend auf den Wandungsabschnitt des Düsenträgers aufgesetzt. Die Verbindung zwischen der Kappe und dem Düsenträger kann z.B. durch einen Schraubendreher gelöst werden, indem er nach dem Einführen in den von der Kappe und der Karosserieöffnung gebildeten Spalt durch Drücken seines Griffes zur Karosserie hin die Kappe aus der Karosserieöffnung hebt.

Vorteilhaft ist es weiterhin, wenn an die innere breite Seitenfläche des Wandungsabschnitts des Düsenträgers Rippen angeformt sind, deren Stirnfläche als Anlagefläche für eine innere breite Seitenfläche der Doppelwandung dient. Dadurch kann zum einen die Doppelwandung besser entformt werden, da der Abstand zwischen ihren beiden Wandungen um den Betrag der Höhe der Rippen größer ist, und zum anderen ist wegen der durch die Stirnfläche der Rippen erhaltenen kleineren Anlagefläche für eine innere breite Seitenfläche der Doppelwandung die Kappe mit einer kleineren Kraft auf den Wandungsabschnitt des Düsenträgers aufsetzbar, wobei die Kappe weiterhin sicher auf dem Düsenträger festsitzt.

Ein weiterer Vorteil ist es, wenn die Vorderseite der Kappe durch einen auf sie aufgesetzten und an ihr befestigten Deckel abgedeckt ist. Dadurch sind Beschädigungen an der Kappe, welche bei ihrem Aufsetzen auf den Düsenträger entstehen können, nach dem Aufsetzen des Deckels auf die Kappe nicht mehr sichtbar. Außerdem ist es bei einer solchen Lösung weiterhin vorteilhaft, wenn die Kappe eine Montagevorrichtung aufweist. Als Montagevorrichtung können in die Kappe eingebrachte Öffnungen oder auf sie aufgebrachte Vorsprünge dienen.

Ebenfalls ist es vorteilhaft, wenn der Außendurchmesser der äußeren Hülse der Kappe etwa dem Außendurchmesser des zylinderförmigen Düsenträgers entspricht. Bei einer solchen Lösung können beim Verstellen des Düsenträgers die äußere Hülse und der Düsenträger in einer entsprechend großen Karosserieöffnung geführt werden.

Außerdem ist es vorteilhaft, wenn die Kappe einen größeren Außendurchmesser aufweist als der Düsenträger. Mit einer solchen Kappe ist es möglich, Befestigungsmittel der Scheibenwaschanlage in der Karosserieöffnung abzudecken.

Weiterhin ist es vorteilhaft, wenn der Bogen, welchen der Wandungsabschnitt des Düsenträgers in seinen senkrechten, zur Mittelachse verlaufenden Querschnitten beschreibt, ein Halbkreis ist oder wenn er über den Halbkreis hinausgehende Endabschnitte aufweist, welche mit ihren sich zugesandten Seitenflächen parallel zueinander verlaufen. Dadurch kann auch der die Düse aufnehmende Hohlraum des Düsenträgers entformt werden, wenn die Mittelachse des zylinderförmigen Düsenträgers in einem spitzen Winkel zur Verstellrichtung der Düse steht.

Die Erfindung ist in der Zeichnung dargestellt und zwar zeigt

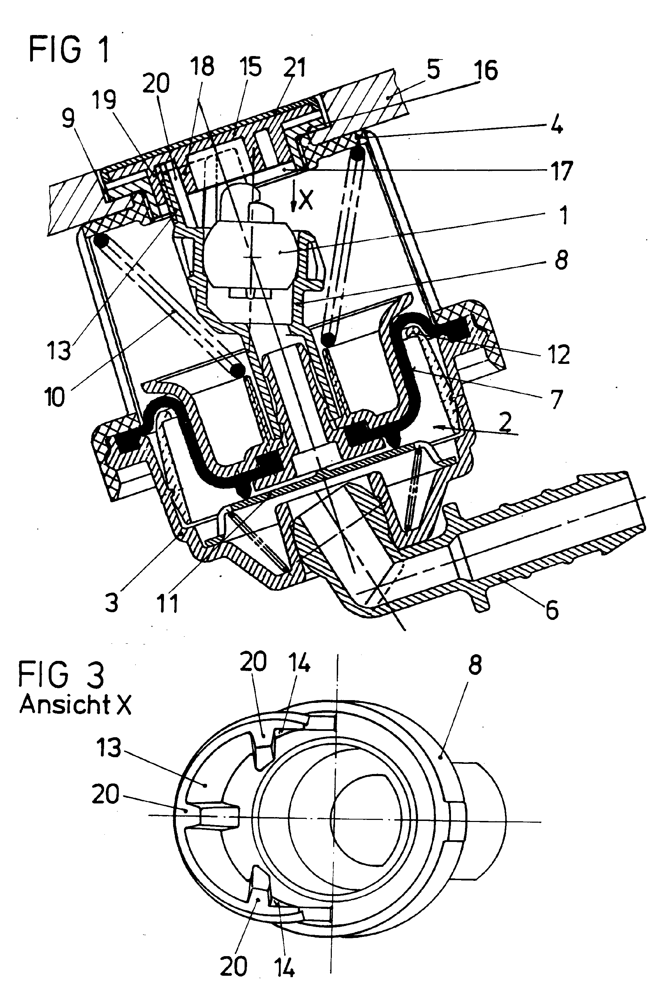

Figur 1 einen vertikalen Längsschnitt durch eine Verstellvorrichtung einer Düse in Ruhestellung,

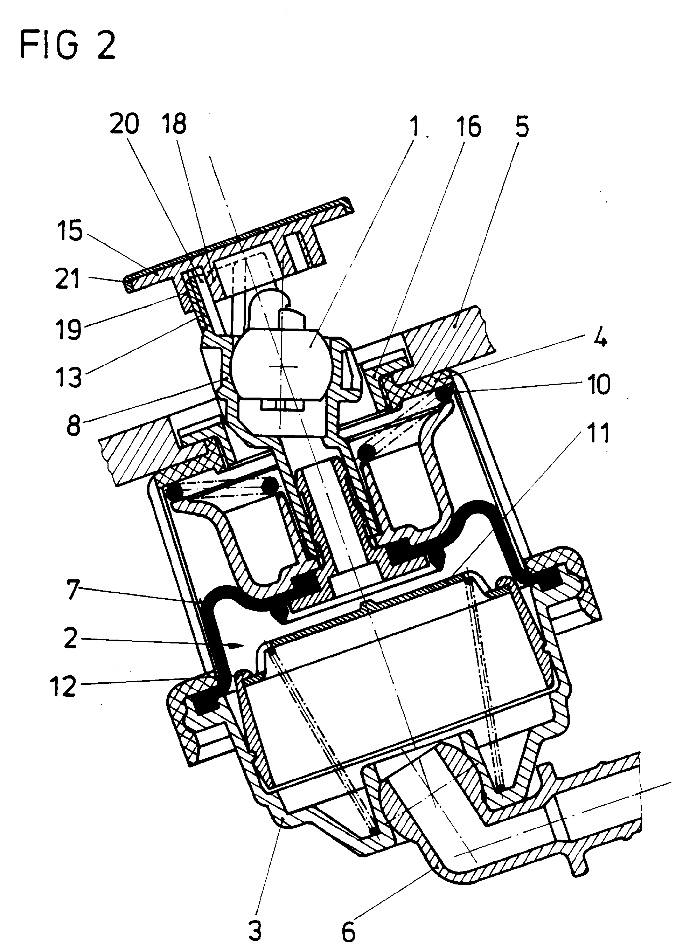

Figur 2 die Verstellvorrichtung nach Figur 1 mit der Düse in Gebrauchsstellung und

Figur 3 eine Ansicht aus der Richtung X auf den die Düse aufnehmenden Düsenträger als Einzelteil.

Das die Düse 1 und die Ventileinrichtung 2 tragende Gehäuse 3, 4 ist unterhalb einer Karosseriewandung 5 angeordnet. In der Ruhestellung der Düse 1 liegt die Düse innerhalb des Gehäuses 3, 4. In der Gebrauchsstellung ist die Düse 1 aus ihrer zurückversetzten Ruhelage durch die Karosserieöffnung 9 hindurchgefahren und ragt über die Karosseriewandung 5 hinaus.

Wird eine in der Zeichnung nicht dargestellte Druckerzeugungseinrichtung betätigt, so strömt durch den Anschlußstutzen 6 Reinigungsflüssigkeit in das Gehäuseteil 3 und drückt gegen die zwischen den beiden Gehäuseteilen 3 und 4 mit ihrem äußeren umlaufenden Rand eingespannte Rollmembran 7. Dabei wird die Rollmembran in Richtung zur Düse 1 angehoben. Somit fährt der in die zentrale Öffnung der Rollmembran 7 eingesetzte zylinderförmige und hohl ausgeführte Düsenträger 8 durch die Karosserieöffnung 9 hindurch und ragt in seiner Endstellung aus der Karosseriewandung 5 heraus. Wird die Druckerzeugungseinrichtung ausgeschaltet, so wird die Rollmembran 7 von der Druckfeder 10 zum Gehäuseteil 3 hin gedrückt. Die Ventileinrichtung 2, welche aus der Rollmembran 7 und einem an einer Dichtlippe der Rollmembran anliegenden Teller 11 mit an seinem umlaufenden Rand eingebrachten Z Öffnungen besteht, öffnet erst kurz bevor die Düse 1 ihre Gebrauchsstellung erreicht hat, da bis dahin der Teller 11 mit angehoben wird und erst nachdem er an dem Anschlag 12 anliegt, die Dichtlippen von dem Teller 11 abheben und die Reinigungsflüssigkeit durch den Düsenträger 8 hindurch zu der Düse strömen kann.

In den Hohlraum des freien Endabschnitts des Düsenträgers 8 ist die Düse klemmend eingesetzt. Die Mittelachse des die Düse aufnehmenden Hohlraums des Düsenträgers und der Düse 1 verläuft in Anbaulage der Verstellvorrichtung etwa senkrecht und zur Mittelachse der Rollmembran bzw. der Mittelachse der Verstellvorrichtung in einem spitzen Winkel. Die Mittelachse der Verstellvorrichtung verläuft senkrecht zur Karosseriewandung 5 und ist auch die Mittelachse für die kreisrunde Karosserieöffnung 9. An die freie Stirnfläche des zylinderförmigen und hohl ausgeführten Düsenträgers 8 ist der Wandungsabschnitt 13 angeformt, welcher für den Sprühkegel der Düse eine Ausnehmung aufweist. Die Ausnehmung ist so gestaltet, daß der zylindrische Wandungsabschnitt 13 in seinen Querschnitten einen Bogen beschreibt, welcher länger ist als der Bogen eines Halbkreises. Die über den Halbkreis hinausgehenden Endabschnitte des Bogens weisen parallel zueinander verlaufende Innenseiten 14 auf. Dies ist notwendig, weil sonst der die Düse 1 aufnehmende Hohlraum des Düsenträgers 8 zum freien Ende des Düsenträgers hin nicht entformt werden könnte.

In der Ruhestellung der Düse ragt der freie Endabschnitt des Wandungsabschnitts 13 bis in die oberhalb der Düse angeordnete Karosserieöffnung 9 hinein. In die Mantelfläche des zylindrischen Wandungsabschnitts 13 des Düsenträgers ist ein Gewinde eingebracht, auf welches die Kappe 15 aufgeschraubt ist. Die Kappe 15 kann erst montiert werden, wenn die Verstellvorrichtung unterhalb der Karosserieöffnung 9 an der Karosseriewandung 5 befestigt ist. Als Befestigungsmittel dient ein von der Außenseite der Karosserie in die Gehäuseöffnung 17 eingedrehter Schraubring 16, welcher an einer nach außen weisenden Stoßfläche der Innenseite der Karosserieöffnung 9 anliegt und das Gehäuseteil 4 gegen die Unterseite der Karosseriewandung 5 preßt. Der Außendurchmesser der Kappe 15 ist so groß, daß die Kappe mit ihrem Randbereich den Schraubring 16 vollständig abdeckt. Zur Befestigung der Kappe 15 an dem Wandungsabschnitt 13 des Düsenträgers 8 dient eine an die Innenseite der Kappe 15 angeformte Doppelwandung, deren Wandungen von einer inneren und äußeren Hülse 18 und 19 gebildet werden. Die äußere Hülse weist ein Innengewinde auf, welches in das Gewinde des Wandungsabschnitts 13 eingreift. Die Mantelfläche der inneren Hülse 18 liegt an Stirnflächen der an die Innenseite des Wandungsabschnitts 13 angeformten Rippen 20 an. Auf die Kappe 15 ist der Deckel 21 aufgesetzt, welcher in seiner Oberfläche der an den Deckel angrenzenden Oberfläche der Karosseriewandung 5 entspricht.

**Patentansprüche**

1. Scheibenwaschanlage für Kraftfahrzeuge, insbesondere Streuscheibenwaschanlage, mit einem zylinderförmigen und hohl ausgeführten Düsenträger (8), in dessen Hohlraum die Düse (1) klemmend eingesetzt ist, welche mit ihrem Sprühkopf aus dem Düsenträger (8) herausragt, der in seiner Ruhestellung in einer Karosserieöffnung (9) versenkt einbaubar ist und in seiner Gebrauchsstellung aus der Karosserieöffnung (9) her-

3

ausfahrbar ist, und mit einer die Sicht auf die versenkte Düse abschirmenden, die Karosserieöffnung verschließbaren Kappe (15), welche an dem freien Ende des Düsenträgers (8) befestigt ist, dadurch gekennzeichnet, daß an die Stirnfläche des zylinderförmigen und hohl ausgeführten Düsenträgers (8) ein zylinderförmiger Wandungsabschnitt (13) angeformt ist, welcher eine solche Ausnehmung aufweist, daß er in seinen senkrecht zur Mittelachse verlaufenden Querschnitten einen in Sprührichtung der Düse (1) geöffneten Bogen beschreibt und mit seinem oberhalb des Sprühkopfes verlaufenden Endabschnitt zwischen zwei an die Innenseite der Kappe (15) angeformte Wandungen (18 und 19) eingreift, von denen eine in eine Hinterschneidung des Wandungsabschnitts (13) des Düsenträgers (8) eingreift.

2. Scheibenwaschanlage nach Anspruch 1, dadurch gekennzeichnet, daß die an die Kappe (15) angeformte Doppelwandung (18, 19) von der Wandung einer inneren und äußeren Hülse gebildet wird.

3. Scheibenwaschanlage nach Anspruch 2, dadurch gekennzeichnet, daß an die innere oder äußere breite Seitenfläche des Wandungsabschnitts (13) des Düsenträgers (8) ein Gewinde aufgebracht ist, in welches das Gewinde einer Wandung (19) der Kappe (15) eingreift.

4. Scheibenwaschanlage nach Anspruch 1 oder 2, dadurch gekennzeichnet, daß die Kappe (15) mit ihrer Doppelwandung (18, 19) selbstrastend auf den Wandungsabschnitt (13) des Düsenträgers aufgesetzt ist.

5. Scheibenwaschanlage nach einem der Ansprüche 1 bis 4, dadurch gekennzeichnet, daß an die innere breite Seitenfläche des Wandungsabschnitts (13) des Düsenträgers (8) Rippen (20) angeformt sind, deren Stirnfläche als Anlagefläche für eine innere breite Seitenfläche der Doppelwandung (18, 19) dient.

6. Scheibenwaschanlage nach einem der Ansprüche 1 bis 5, dadurch gekennzeichnet, daß die Kappe kreisrund ist und konzentrisch zur Mittelachse des zylinderförmigen Wandungsabschnitts (13) des Düsenträgers (8) verläuft.

7. Scheibenwaschanlage nach einem der Ansprüche 1 bis 6, dadurch gekennzeichnet, daß die Vorderseite der Kappe (15) durch einen auf sie aufgesetzten und an ihr befestigten Deckel (21) abgedeckt ist.

8. Scheibenwaschanlage nach Anspruch 7, dadurch gekennzeichnet, daß die Kappe (15) eine von dem Deckel (21) abgedeckte Montagevorrichtung für die Kappe (15) aufweist.

9. Scheibenwaschanlage nach einem der Ansprüche 1 bis 8, dadurch gekennzeichnet, daß der Außendurchmesser der äußeren Hülse (19) etwa dem Außendurchmesser des zylinderförmigen Düsenträgers (8) entspricht.

10. Scheibenwaschanlage nach einem der Ansprüche 1 bis 9, dadurch gekennzeichnet, daß die Kappe (15) einen größeren Außendurchmesser aufweist als der Düsenträger (8).

11. Scheibenwaschanlage nach einem der Ansprüche 1 bis 10, dadurch gekennzeichnet, daß der Bogen, welchen der zylindrische Wandungsabschnitt (13) des Düsenträgers (8) in seinen senkrechten, zur Mittelachse verlaufenden Querschnitten beschreibt, mindestens der Bogen eines Halbkreises ist.

12. Scheibenwaschanlage nach Anspruch 11, dadurch gekennzeichnet, daß über den Halbkreis hinausgehende Endabschnitte des Bogens mit ihren sich zugewandten Seitenflächen (14) parallel zueinander verlaufen.

## Claims

1. Window washer system for motor vehicles, more particularly a lens glass washer system, having a cylindrical nozzle carrier (8) of hollow construction, into the hollow space of which the nozzle (1) is inserted and clamped, with its spray head projecting out of the nozzle carrier (8), which can be installed flush in an opening (9) in the vehicle body when in its rest position and can be moved out of the opening (9) in the vehicle body in its operational position, and having a cap (15) which screens the flush-fitted nozzle from view, is adapted to seal the opening in the vehicle body and is attached to the free end of the nozzle carrier (8), characterised by forming on the end face of the cylindrical, hollow nozzle carrier (8) a cylindrical section of wall (13) incorporating a recess such that in its cross-sections running perpendicular to the central axis said wall section describes an arc opening in the spraying direction of the nozzle (1) and with its end section extending above the spray head it engages between two walls (18 and 19) formed on the inside of the cap (15), one of which engages in an undercut in the wall section (13) of the nozzle carrier (8).

2. Window washer system according to claim 1, characterised in that the double wall (18, 19) formed onto the cap (15) is constituted by the wall of an inner and outer sleeve.

3. Window washer system according to claim 2, characterised in that incorporated on the inner or outer broad lateral face of the wall section (13) of the nozzle carrier (8) is a thread into which the thread of a wall (19) of the cap (15) engages.

4. Window washer system according to claim 1 or 2, characterised in that the cap (15) is set with its double wall (18, 19) self-locking onto the wall section (13) of the nozzle carrier.

5. Window washer system according to one of claims 1 to 4, characterised in that formed onto the inner broad lateral face of the wall section (13) of the nozzle carrier (8) are ribs (20) whose end face acts as a contact surface for an inner broad lateral face of the double wall (18, 19).

6. Window washer system according to one of claims 1 to 5, characterised in that the cap is circular and runs concentric to the centre axis of the cylindrical wall section (13) of the nozzle carrier (8).

7. Window washer system according to one of claims 1 to 6, characterised in that the front side of the cap (15) is covered by a lid (21) placed thereon and fastened thereto.

8. Window washer system according to claim 7, characterised in that the cap (15) incorporates a fitting device for the cap (15) which is covered by the lid (21).

9. Window washer system according to one of claims 1 to 8, characterised in that the external diameter of the outer sleeve (19) corresponds approximately to the external diameter of the cylindrical nozzle carrier (8).

10. Window washer system according to one of claims 1 to 9, characterised in that the cap (15) has a larger external diameter than the nozzle carrier (8).

11. Window washer system according to one of claims 1 to 10, characterised in that the arc described by the cylindrical wall section (13) of the nozzle carrier (8) in its cross-sections perpendicular to the centre axis is at least the arc of a semi-circle.

12. Window washer system according to claim 11, characterised in that end sections of the arc extending beyond the semi-circle run with their facing lateral surfaces (14) parallel to one another.

**Revendications**

1. Installation de lave-glace pour véhicules automobiles, notamment installation de lavage pour diffuseurs de feux, comprenant un porte-buse (8) cylindrique et de configuration creuse, dans le volume intérieur duquel la buse (1) est encastrée à coincement, cette buse faisant saillie par sa tête de pulvérisation en dehors du porte-buse (8), lequel peut être rentré dans une ouverture de la carrosserie dans sa position de repos et peut être sorti hors de l'ouverture (9) de la carrosserie dans sa position de service, et comprenant aussi un capuchon (15) qui peut obturer l'ouverture de la carrosserie, qui dissimule la buse rentrée et qui est fixé à l'extrémité libre du porte-buse, caractérisée en ce qu'à la surface frontale du porte-buse (8) cylindrique et de configuration creuse, est venu de matière un segment de paroi cylindrique (13) qui présente un évidement tel qu'il décrive dans ses sections transversales s'étendant perpendiculairement à l'axe médian un arc qui s'ouvre dans la direction de pulvérisation de la buse (1) et qui est engagé par son segment terminal s'étendant au-dessus de la tête de pulvérisation entre deux parois (18 et 19) venues de matière avec la face interne du capuchon (15), et dont l'une est engagée dans une contre-dépouille du segment de paroi (13) du porte-buse.

2. Installation de lave-glace selon la revendication 1, caractérisée en ce que la double paroi (18, 19) venue de matière avec le capuchon (15) est formée par les parois d'un collet intérieur et d'un collet extérieur.

3. Installation de lave-glace selon la revendication 2, caractérisée en ce que, sur la surface latérale large, interne ou externe, du segment de paroi (13) du porte-buse (2), est prévu un filetage dans lequel se visse le filetage d'une paroi (19) du capuchon (15),

4. Installation de lave-glace selon la revendication 1 ou 2, caractérisée en ce que le capuchon (15) est emboîté par sa double paroi (18, 19) sur le segment de paroi (13) du porte-buse avec effet de verrouillage automatique.

5. Installation de lave-glace selon une des revendications 1 à 4, caractérisée en ce que, sur la surface latérale large interne du segment de paroi (13) du porte-buse (8) sont venues de matière des nervures (20) dont la surface frontale sert de surface d'appui pour une surface latérale interne large de la double paroi (18, 19).

6. Installation de lave-glace selon une des revendications 1 à 5, caractérisée en ce que le capuchon est circulaire et s'étend concentriquement à l'axe médian du segment de paroi cylindrique (13) du porte-buse (8).

7. Installation de lave-glace selon une des revendications 1 à 6, caractérisée en ce que la face avant du capuchon (15) est recouverte par un couvercle (21) monté et fixé sur cette face.

8. Installation de lave-glace selon la revendication 7, caractérisée en ce que le capuchon (15) présente un dispositif de montage pour le montage du capuchon (15) qui est recouvert par le couvercle (21).

9. Installation de lave-glace selon une des revendications 1 à 8, caractérisée en ce que le diamètre extérieur du collet extérieur (19) correspond à peu près au diamètre extérieur du porte-buse cylindrique (8).

10. Installation de lave-glace selon une des revendications 1 à 9, caractérisée en ce que le capuchon (15) présente un diamètre extérieur supérieur à celui du porte-buse (8).

11. Installation de lave-glace selon une des revendications 1 à 10, caractérisée en ce que l'arc que le segment de paroi cylindrique (13) du porte-buse (8) décrit dans ses sections verticales, s'étendant vers l'axe médian, est au moins l'arc d'un demi-cercle.

12. Installation de lave-glace selon la revendication 11, caractérisée en ce que les segments d'extrémité de l'arc, qui débordent au-delà du demi-cercle, s'étendent parallèlement entre eux par leurs surfaces latérales (14) qui se font face.

**FIG 1**

**FIG 3**
Ansicht X

FIG 2